# EUROPEAN PATENT APPLICATION

(11) **EP 3 594 111 A1**
(43) Date of publication of application: **15.01.2020**
(21) Application number: 19184970.2
(22) Date of filing: 15.07.2014
(51) Int. Cl.: B64C 13/10

(54) **FEEDBACK SYSTEM FOR A FLYING CONTROL MEMBER**

(30) Priority: 16.07.2013 GB 201312667; 15.11.2013 GB 201320181
(62) Divisional of application: 14177141.0
(71) Applicant: McCulloch, Norman L, Tonbridge, Kent TN9 1NF (GB)
(72) Inventor: McCulloch, Norman L, Tonbridge, Kent TN9 1NF (GB)
(74) Representative: Elkington and Fife LLP

(57) **Abstract**

An aircraft has servo mechanisms for adjusting the flying control surfaces in accordance with movement by the pilot of the flying control member in the cockpit of the aircraft. A feedback feel device controlled by a computer monitors the power transmitted through the servo mechanism for one or more of the flying control surfaces which initiates an aerobatic manoeuvre, and applies to the flying control member a tactile response representative of the variation in power during the aerobatic manoeuvre. The computer is programmed so that the tactile response is weak when the aerobatic manoeuvre is performed at an airspeed close to the stalling speed at a cruising altitude, and the tactile response is strong when the aerobatic manoeuvre is performed at an airspeed close to the maximum at the same cruising altitude, whereby the nature of the response provides the pilot with a measure of the airspeed of the aircraft.

## Description

### Field of invention

This invention relates to aircraft and is concerned more particularly with aircraft of the kind having servo mechanism for adjusting the flying control surfaces in accordance with movement by the pilot of the flying control member in the cockpit of the aircraft.

### Background

An example of an aircraft having servo mechanism for adjusting the flying control surfaces in accordance with movement by the pilot of the flying control member in the cockpit of the aircraft is the so-called fly-by-wire aircraft in which hydraulic servo mechanism is operated by electrical computers.

It is known to provide aircraft of this kind with a feedback system designed to apply a force to the flying control member during an aerobatic manoeuvre, the force varying in accordance with flight parameters including "inter alia" the indicated airspeed and the degree of movement of the flying control member out of a neutral central position. This provides the pilot with a "feel" for the forces exerted on the aircraft during the aerobatic manoeuvre. Examples of such feedback systems are described in Patent Specifications EP 0034873A3, GB 619988 and US 2008/0142642A1.

The indicated airspeed of an aircraft is normally obtained from the dynamic air pressure acting on a pitot probe on a fuselage or on a wing of an aircraft, this pressure being supplied to an airspeed indicator calibrated to show the airspeed as a function of the dynamic air pressure. If however the pitot probe becomes partially or wholly blocked during flight, the airspeed indicator will give a false reading. This may arise, for example, due to the formation of ice on the probe, or due to the aircraft flying into a swarm of insects or into a cloud of volcanic ash. The pilot in an aircraft in which there is a malfunction of the airspeed indicator will not know whether the aircraft is flying too slowly with the risk of stalling or whether the aircraft is flying too fast with the risk of exceeding the maximum airspeed for the aircraft, at the altitude at which it is flying. Blockage of the pitot tube may also cause malfunction of the altimeter and the vertical speed indicator, and there will be little or no "feel" in the flying control member due to the lack of airspeed input into the feedback system. The pilot may then become confused.

### Summary of the invention

An object of the present invention is to provide apparatus enabling the pilot of an aircraft of the kind described to estimate the indicated airspeed in the event of malfunction of the airspeed indicator. For convenience, the term "indicated airspeed" is used throughout to denote the airspeed corresponding to the dynamic air pressure at the pitot, even when there is malfunction of the airspeed indicator.

When an aircraft is performing a banking manoeuvre to turn to port the torque exerted on the aileron in the starboard wing due to the air resistance increases with increase in the angle of deflection of the aileron relative to the wing, and similarly in a turn to starboard the torque exerted on port aileron due to the air resistance increases with increase in the angle of deflection relative to the wing, and the present invention arose from the appreciation that, at slow airspeeds, only a small amount of torque is required to move the ailerons from the central position into a position which produces the maximum rate of roll, but at higher airspeeds a much greater torque is required to move the ailerons from the central position to a position which produces the same rate of roll.

According to the present invention, there is provided a feedback system as defined in claim 1.

An aspect of the invention provides a feedback system for the flying control member in the cockpit of an aircraft having servo mechanism for adjusting the flying control surfaces in accordance with movement by the pilot of the flying control member comprising sensing means operable to monitor flight parameters during an acrobatic manoeuvre, a computer operable by the sensing means to generate signals representative of the flight parameters, and tactile means operable by the signals to impart to the flying control member a tactile response representative of the flight parameters, characterised in that the sensing means are operable to monitor the power transmitted through the servo mechanism for one or more of the flying control surfaces which initiate an aerobatic manoeuvre, the computer is programmed to generate signals representative of the variation in the power while the aircraft performs the aerobatic manoeuvre, and the tactile means are operable by the signals to impart to the flying control member a tactile response representative of the variation in power during the aerobatic manoeuvre, whereby the nature of the tactile response when the aircraft performs the same aerobatic manoeuvre at different speeds throughout the speed range at the same altitude provides the pilot with an estimate of the indicated airspeed of the aircraft. It is to be understood that the wording "the same acrobatic manoeuvre" means an acrobatic manoeuvre which has substantially the same rate of roll or the same rate of pitch as the previous acrobatic manoeuvre.

Embodiments of the invention thus provide a system for providing feedback for an aircraft having an input means that is used to adjust flying control surfaces via at least one servo mechanism. The feedback system comprises a plurality of sensors or monitoring means that are adapted to detect and measure the power transmitted through the at least one servo mechanism as it is used to control at least one of the flying control surfaces while the aircraft is flying or manoeuvring and a processor adapted to receive a signal from the sensors or monitoring means and adapted to provide feedback via the input means based on the detected or measured power through the servo mechanism, wherein the feedback is a tactile response and the intensity or magnitude of the tactile response being dependent on the detected or measured power through the servo mechanism, thus providing a pilot with an estimate of the airspeed of the aircraft.

The power transmitted through the servo mechanism may be monitored by measuring the electric current supplied to the servo mechanism, or by measuring the pressure of liquid in the actuators of electro hydraulic servo mechanism, or by measuring the torque transmitted through the servo mechanism, or by any other parameter which varies with the variation in power.

The feedback system according to the invention may be calibrated at a low altitude with the computer programmed so that the tactile response is weak at the small variations in power which occur when the aerobatic manoeuvre is performed at an indicated airspeed close to the stalling speed in straight and level flight at the low altitude, and the tactile response is relatively strong at the large variations in power which occur when the aerobatic manoeuvre is performed at an indicated airspeed close to the permitted maximum at the low altitude.

However, due to the reduction in density of the air with increase in altitude, the range of speed between the indicated airspeed at which a sub-sonic aircraft stalls in straight and level flight and the maximum indicated airspeed at which the aircraft is designed to fly reduces progressively with increase in altitude, and at high altitudes there is only a small range of speed between the stalling indicated airspeed and the maximum indicated airspeed.

The feedback system is therefore preferably calibrated at spaced altitudes over the height range of the aircraft, or continuously over the full height range of an aircraft, so that the tactile response is weak at the small variations in power which occur when the aerobatic manoeuvre is performed at an indicated airspeed close to the stalling speed of the aircraft in straight and level flight at each altitude, and the tactile response is relatively strong at the larger variations in power which occur when the aerobatic manoeuvre is performed at an indicated airspeed close to the maximum permitted airspeed at each altitude.

In the feedback system of the invention the computer may be programmed so that the strength of the tactile response increases in proportion with increase in the power transmitted through the servo mechanism through the range of speed of the aircraft at each altitude, when performing the same aerobatic manoeuvre. Alternatively, the computer may be programmed so that the strength of the tactile response is directly proportional to the indicated airspeed at each altitude, when the aircraft is performing the same aerobatic manoeuvre.

The tactile response is preferably a resilient force urging the flying control member towards a central position when the aircraft is performing an aerobatic manoeuvre, but the tactile response may be a vibratory force, the frequency of which is representative of the variation in power during an acrobatic manoeuvre. It is to be understood that the term "weak" is used herein to define a tactile response which is the minimum force detectable by the pilot or by low frequency in the case of a vibratory response, and that the term "strong" is used herein to define a tactile response which is the maximum force acceptable to the pilot or by high frequency in the case of a vibratory tactile response without undue strain on the fingers, hands or arms of the pilot.

The pilot of an aircraft of the kind described which has been modified in accordance with the invention will know, from experience flying with an accurate airspeed indicator, the strength of the tactile response to expect from the flying control member during an acrobatic manoeuvre at a slow indicated airspeed close to the stalling airspeed at a cruising altitude, and performing the same manoeuvre at a cruising indicated airspeed at the cruising altitude. The tactile response is not an accurate representation of the indicated airspeed when the altitude, the weight of the aircraft, the barometric pressure and/or the air temperature differs from that at calibration, but it is sufficient to provide the pilot with an estimate of the indicated airspeed. In the event of malfunction of the airspeed indicator due to blockage of the pitot tube when the aircraft is flying on automatic pilot under control of the computers, the computers normally close down the automatic pilot and the pilot himself has to take over manual control. Modern aircraft are normally designed to fly straight and level automatically if the engine thrust and elevator trim are adjusted to specific settings, and the computers can be programmed to set the controls to these settings before closing down the automatic pilot. The pilot may nevertheless be confused by the false readings on the instruments, but movement of the controls to initiate a banking, diving or climbing manoeuvre will confirm immediately, by the nature or strength of the tactile response transmitted from the flying control member to his hand, that he is flying well above the stalling speed and below the maximum air speed.

The sensing means may be operable to monitor the variation in power transmitted through the servo mechanism for an aileron during a banking manoeuvre, but is preferably operable to monitor the larger variation obtained by measuring the difference between the power transmitted through the servo mechanism for the aileron in one of the two main wings of the aircraft and the power transmitted through the servo mechanism for the aileron in the other main wing during variation in the degree of bank of the aircraft, the computer means being operable to generate signals representative of the difference in power, and the tactile response being representative of the difference in power. Alternatively, or in addition, the sensing means may be operable to monitor the power transmitted through the servo mechanism for the elevator in the tail plane of the aircraft during variation in the degree of pitch of the aircraft, the signals being representative of the variation in power during the pitching movement.

The feedback system of the invention may be provided with electro-magnetic means operable by the signals generated by the computer to apply, to the flying control member, a resilient force urging the flying control member towards a central position, the strength of the resilient force being representative of the variation in the power during the acrobatic manoeuvre. Alternatively, the aircraft may be provided with a vibratory device fitted to the flying control member and operable by the signals generated by the computer to apply, to the control member, a vibratory force the frequency of which is representative of the variation in power during the aerobatic manoeuvre. The vibratory device may be an electric motor having a rotary armature fitted with a bob weight offset from the rotational axis of the armature, as known in the art, the computer being programmed to vary the speed of the armature, and hence the frequency of vibration, in response to variation in the power transmitted through the servo mechanism in an aerobatic manoeuvre.

A fly-by-wire aircraft having a flying control unit of conventional construction with a side stick for the pilot can conveniently be fitted with an additional feedback system
according to the invention, the feedback system having a vibratory motor fitted on to the side stick and operable, when required, by an electric switch on the instrument panel in the cockpit, or automatically in response to shutdown of the automatic pilot due to blockage of the pitot tube.

The term "stalling speed" is used throughout to denote, in a fully laden aircraft in straight flight, the indicated airspeed at which the laminar flow of air over at least part of the wing surface begins to collapse when the angle of attack between the wings and the direction of flight increases to a critical value.

In one embodiment, a feedback system is provided for a flying control member in the cockpit of an aircraft having servo mechanism for adjusting the flying control surfaces in accordance with movement by the pilot of the flying control member comprising sensing means operable to monitor flight parameters during an aerobatic manoeuvre, a computer operable by the sensing means to generate signals representative of the flight parameters, and tactile means operable by the signals to impart to the flying control member a tactile response representative of the flight parameters, characterised in that the sensing means are operable to monitor the power transmitted through the servo mechanism for one or more of the flying control surfaces which initiate an acrobatic manoeuvre, the computer is programmed to generate signals representative of the variation in the power while the aircraft is performing the same aerobatic manoeuvre at different speeds throughout a speed range at the same altitude, and the tactile means are operable by the signals to impart to the flying control member a tactile response representative of the variation in power during the aerobatic manoeuvre, whereby the nature of the tactile response when the aircraft performs the same aerobatic manoeuvre provides the pilot with an estimate of the indicated airspeed of the aircraft.

In an embodiment, the computer is programmed so that the tactile response is weak when the aerobatic manoeuvre is performed at an indicated airspeed close to one end of the range of airspeed between the stalling speed and the maximum permitted airspeed when flying at, at least, one cruising altitude, and the tactile response is relatively strong when the same aerobatic manoeuvre is performed at an indicated airspeed close to the other end of the range of airspeed at the cruising altitude.

In another embodiment, the computer is programmed so that the tactile response is weak at the small variations in power which occur when the acrobatic manoeuvre is performed at an indicated airspeed close to the stalling speed of the aircraft at, at least, one
cruising altitude of the aircraft, and the tactile response is relatively strong at the larger variations in power which occur when the same aerobatic manoeuvre is performed at an indicated airspeed close to the maximum permitted at the cruising altitude.

In another embodiment, the computer is programmed so that the tactile response is weak when aerobatic manoeuvre is performed at an indicated airspeed close to the stalling speed at each altitude in the height range of the aircraft, and the tactile response is relatively strong when the same aerobatic manoeuvre is performed at an indicated airspeed close to the maximum permitted at each altitude.

In another embodiment, the computer is programmed so that strength of the tactile response is directly proportional to the indicated airspeed throughout the range of airspeed between the stalling speed and the maximum permitted airspeed at each altitude when performing the aerobatic manoeuvre.

In a further embodiment, the tactile response is a resilient force urging the flying control member towards a central position.

In a further embodiment of the invention, the tactile response is a vibratory force applied to the flying control member, the frequency of the vibratory force being representative of the said variation in power.

In another embodiment, the sensing means are operable to measure the difference between the power transmitted through the servo mechanism operating the aileron in one of the main wings of the aircraft and the power transmitted through the servo mechanism operating the aileron in the other main wing during variations in the degree of bank of the aircraft, and the computer is programmed to generate signals representative of the said difference in power, and the tactile means are operable by the signals to impart to the flying control member a tactile response representative of the said difference in power.

In another embodiment, the system can be used in an aircraft having hydraulic actuators for adjusting the flying control surfaces and the power transmitted through the servo mechanism is monitored by measuring the pressure of the hydraulic fluid in the actuators.

In another embodiment, the tactile means comprises electro-magnetic means operable by said signals generated by the computer to apply to the flying control member a resilient force urging the flying control member towards a central position, the strength of the resilient force being representative of the variation in said power during the aerobatic manoeuvre.

In another embodiment, the tactile means comprises a vibratory motor fitted to the flying control member and operable by the signals generated by the computer to apply, to the flying control member, a vibrator force the frequency of which is representative of the variation in said power during the aerobatic manoeuvre.

### Brief description of the drawings

A conventional aircraft of the kind described and fitted with a feedback device controlled by a computer for applying tactile resistance to movement of the flying control lever can easily be modified by reprogramming the computer to operate in accordance with the present invention. Specific embodiments of the invention and calibration of such an aircraft for a cruising altitude will now be described, by way of example, with reference to the accompanying schematic drawings, in which:
Figure 1 is an isometric view of a flying control unit of simplified construction;
Figure 2 is a vertical section through the transverse axis **A-A** in Figure 1;
Figure 3 is a vertical section through the longitudinal axis **B-B** in Figure 1; and
Figure 4 is an isometric view of a modified construction of the flying control unit of Figures 1-3.

### Detailed description

The aircraft is of conventional construction and has the ailerons in the wings and the elevator in the tail each angularly adjustable by separate hydraulic actuators controlled through a computer by the flying control unit operated by the pilot. Each aileron and the elevator may be formed in separate sections, each section being operated by a separate actuator and the actuators for associated sections being fed from a common supply.

The control unit comprises an outer casing 10 open at the top, a cage 11 pivotally mounted in the outer casing 10 for angular movement about a transverse axis A-A through the lower portion of the outer casing 10, and a control lever 12 pivotally mounted in the cage for angular movement about a longitudinal axis B-B which intersects the transverse
axis A-A, the control lever 12 projecting upwardly from the top end of the cage 11 and out of the open top of the outer casing 10. The upper end portion of the control lever 12 is fitted with a handgrip 12a of a size such that it can easily be held in the hand of the pilot. The control unit is mounted in the cockpit and arranged with its longitudinal axis B-B parallel to the fore and aft axis of the aircraft and its transverse axis A-A parallel to a port and starboard axis of the aircraft, so that the control lever 12 is movable from an aileron-neutral position on the cage to aileron-setting positions to the port and starboard of the aileron-neutral position, and the control lever 12, together with the cage 11, is movable fore and aft from an elevator-neutral position in the outer casing to elevator-setting positions to the fore and aft of the elevator-neutral position.

The outer casing 10 is fitted with electrical equipment co-operating with the cage 11 to generate electrical signals which are fed to a computer for controlling angular movement of the elevator in response to fore and aft movement of the control lever 12, together with the cage 11, into any selected one of the elevator setting positions in each of which the computer adjusts the elevator to achieve a specific rate of pitch, and the cage 11 is fitted with electrical equipment co-operating with the control lever 12 to generate electrical signals which are fed to the computer for controlling angular movement of the ailerons in response to port or starboard movement of the control lever 12 into any selected one of the aileron-setting positions in each of which the computer adjusts the ailerons to achieve a specific rate of roll, all as known in the art.

In accordance with the invention, the cage 11 is fitted with a starboard electro magnetic solenoid 13 having an a plunger 14 arranged to abut against the control lever when the control lever is any of its starboard setting positions, and the cage 11 is fitted with a port electro magnetic solenoid 15 having a plunger 16 arranged to abut against the
control lever when the lever is in any of its port setting positions, the solenoids 13,15 being operable when energised to exert a resilient force proportional to the current supplied and urging the control lever towards its aileron neutral position. The outer casing 10 is fitted with a fore electro magnetic solenoid 20 having a plunger 21 arranged to abut against the fore wall of the cage when the control lever, together with the cage, is in any of its fore elevator setting positions, and the outer cage is fitted with an aft electro magnetic solenoid 22 having a plunger 23 arranged to abut against the aft wall of the cage when the control lever, together with the cage, is in any of its aft elevator setting positions, the solenoids 20, 22 being operable when energised to exert a resilient force proportional to the current supplied and urging the control lever, together with the cage, towards its elevator neutral position. In the drawings the plungers of the solenoids are all shown in the fully retracted position in order to illustrate the freedom of movement of the control lever 12, but in operation the plungers would be in contact with the control lever when in its central neutral position.

One method of calibrating the aircraft for operation according to the invention, will now be described by way of example.

The aircraft, when carrying a full load, is flown at its normal cruising altitude and at an airspeed close to the stalling airspeed, and the pressures of liquid in the port and starboard aileron actuators are measured when the aircraft is subjected to the maximum rate of roll (without actually stalling the aircraft) by movement of the flying control lever to either port or starboard. The airspeed is then increased by a small increment, for example 10 knots, and the pressures of liquid in the port and starboard aileron actuators again measured when the aircraft is subjected to the same rate of roll. This operation is repeated for each incremental speed increase, and then repeated finally at the maximum permissible airspeed
for the normal cruising altitude. The difference between the measured pressures of liquid in the port and starboard aileron actuators at the stalling speed is then calculated, and this pressure difference used to programme the computer to supply, to the port and starboard solenoids in the flying control unit, sufficient electric current to exert on the control lever the minimum tactile force detectable by the pilot. The starboard solenoid will of course be inoperable in a turn to port since it will be out of contact with the control lever, and similarly the port solenoid will be inoperable in a turn to starboard. The difference between the measured pressures of liquid in the port and starboard aileron actuators at the maximum permissible airspeed is then calculated, and this pressure difference used to programme the computer to supply, to the port and starboard solenoids, sufficient current to exert on the control lever the maximum tactile force acceptable to the pilot. The difference between the measured pressures of liquid in the port and starboard aileron actuators is then calculated for each of the airspeed levels between the stalling airspeed and the maximum permissible airspeed, and the computer programmed so that the port and starboard solenoids exert increasing tactile force on the control lever in accordance with increase in airspeed when the aircraft is subjected to the same rate of roll. The tactile force exerted on the control lever during movement of the control lever between the aileron neutral position and the aileron setting position providing the same rate of roll at each incremental speed increase will be determined by the computer by mathematical interpolation between the end points. The computer is also programmed so that any increase in the pressure difference above that calculated for the maximum permissible airspeed at crusing altitdue, due to an aerobatic manoeuvre at a higher speed at lower altitude, will result in a tactile force substantially equal to that obtainable at the normal curising altitude. Since the range of speed between the stalling indicated airspeed and the maximum indicated airspeed reduces progressively with increase in altitude, calibration of an aircraft as described above is preferably carried out at spaced altitudes over the height range of the aircraft, and the aircraft provided with an altitude control operable to detect the altitude at which the aircraft is flying and to preset the computer to select the range of tactile force on the control lever applicable to that altitude. The tactile force exerted on the control lever during aerobatic manoeuvres at intermediate altitudes will be determinded by the computer by mathematical interpolation. The altitude control preferably includes a radar-operated altitude meter or other altitude measuring device distinct from an atmospheric-pressure-operated altimeter having a sensor which could possibly malfunction due to accumulation thereon of ice, insects or volcanic ash.

Calibration of the aircraft in operation of the elevator is similar to that of the ailerons described above, except that the computer is programmed to vary the tactile force in response to the difference between the pressure of liquid in the elevator actuator when the aircraft is flying straight and level and the pressure of liquid in the elevator actuator when the aircraft is subjected to the same rate of pitching movement, throughout the range between the stalling airspeed and the maximum permitted airspeed.

Instead of the strength of the tactile force being directly related to the pressure difference between the port and starboard aileron actuators, and the pressure difference in the elevator actuator, the computer may be programmed to detect the airspeed associated with the pressure difference and to increase the strength of the tactile force in proportion to increase in the airspeed.

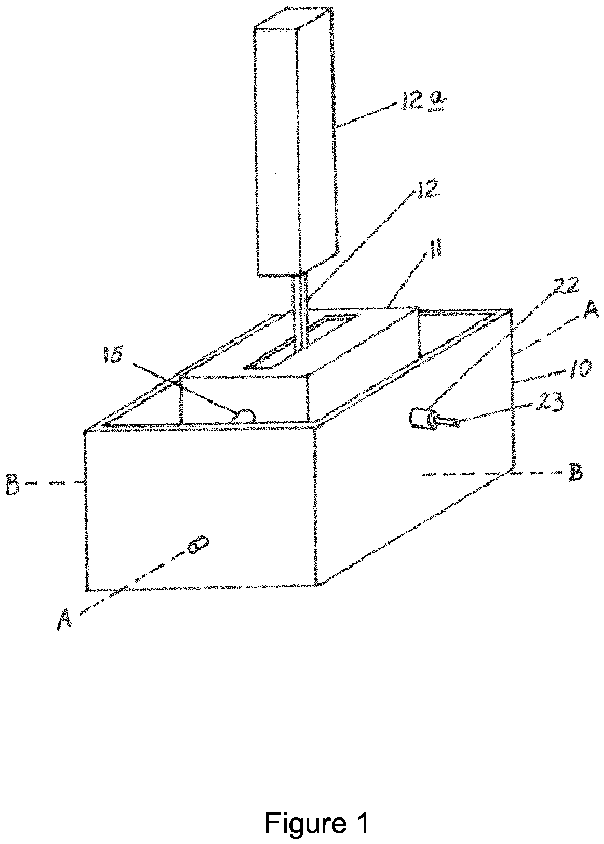

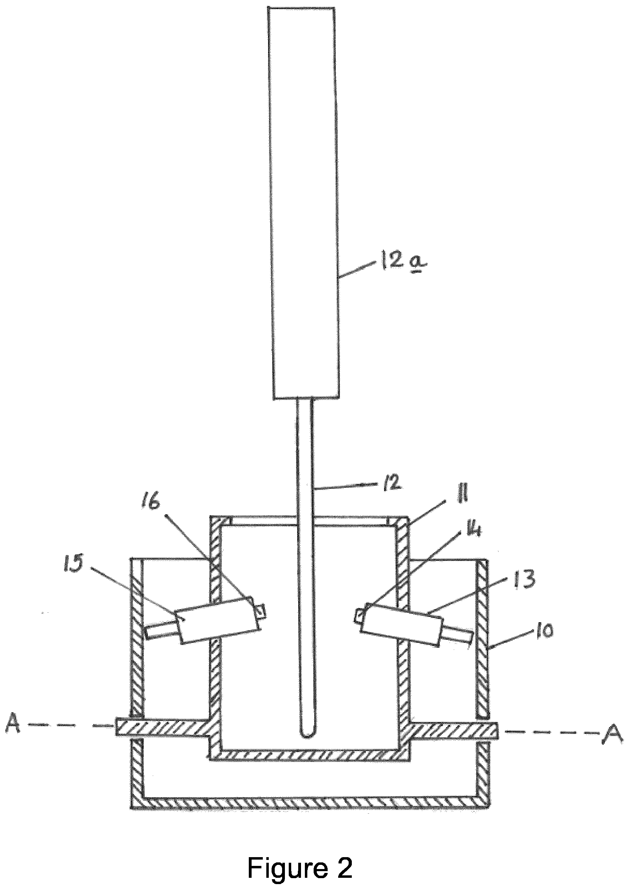

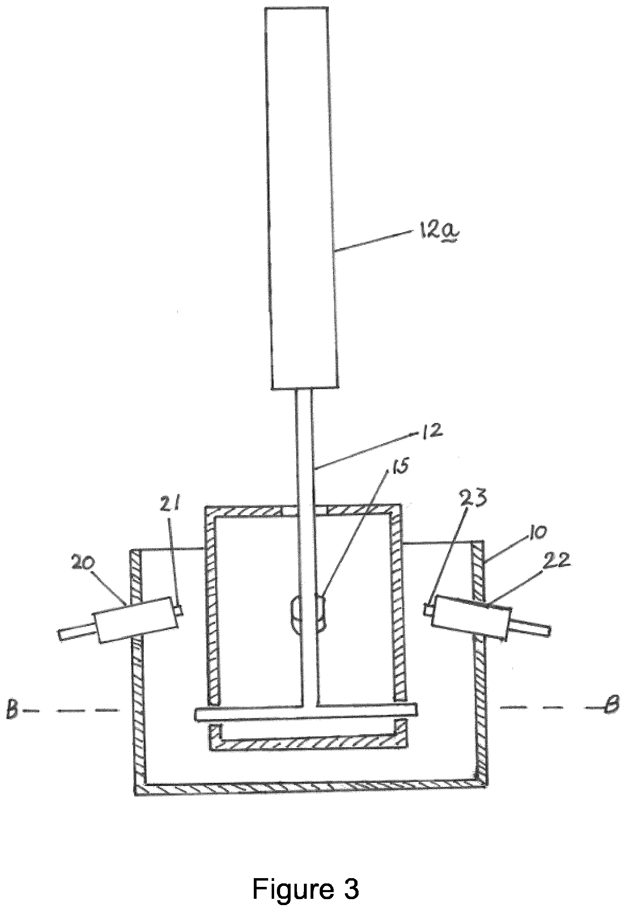

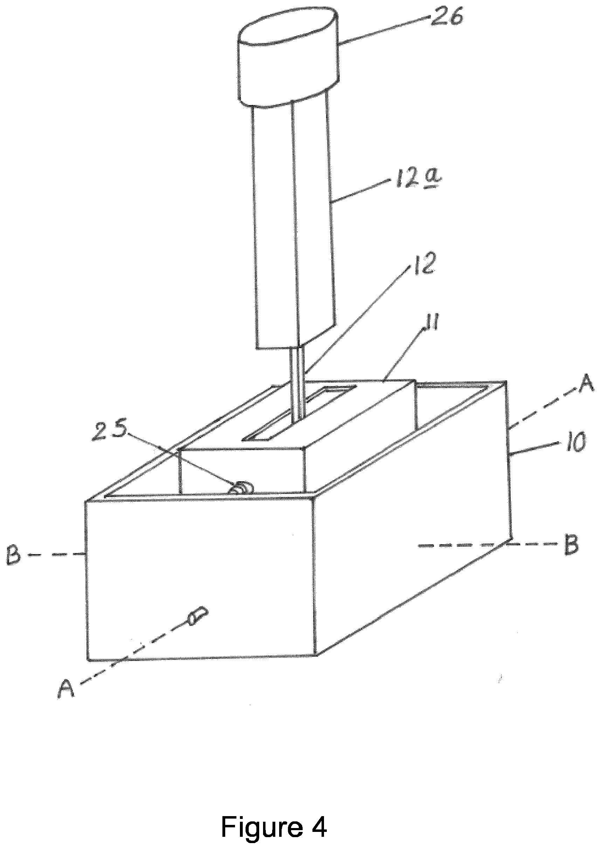

The flying control unit of Figure 4 is similar to that of Figures 1-3 except that solenoids 13, 15 are replaced by coil springs, only one of which is shown in Figure 4, which urge the control lever 12 towards its aileron neutral position, and also urge the control lever 12 together with the cage 11 towards its elevator neutral position. The upper end of the control lever is fitted with a vibratory motor 26 having an off-balance rotor designed to impart vibration to the control lever upon rotation of the rotor.

In an aircraft fitted with a feedback system incorporating the flying control unit of Figure 4, the computer is programmed so that at, at least, one cruising altitude the speed of rotation of the rotor, and consequently the frequency of vibration imparted to the control lever, is varied in accordance with the variation in the difference between the measured pressures of liquid in the port and starboard ailerons during the same rolling aerobatic manoeuvre at the cruising altitude, and in accordance with the difference between the pressure of liquid in the elevator actuator when the aircraft is flying straight and level and the pressure of liquid in the elevator actuator when the aircraft is subjected to the same rate of pitching movement, throughout the range between the stalling airspeed and the maximum permitted airspeed. The programming of the computer may be such that the frequency of the vibration is slow when the aircraft is performing the aerobatic manoeuvre at a speed close to the stalling speed and the frequency of the vibration is fast when the aircraft is performing the aerobatic manoeuvre at a speed close to the maximum permitted airspeed. Alternatively, the programming of the computer may be such that the frequency of the vibration is fast when the aircraft is performing the acrobatic manoeuvre at a speed close to the stalling speed and the frequency of the vibration is slow when the aircraft is flying close to the maximum permitted airspeed. The feedback system is preferably provided with an electric switch in the cockpit of the aircraft to disconnect the vibratory motor when not required.

Aspects of the invention will now be described by way of clauses below:
Clause 1. A feedback system for the flying control member in the cockpit of an aircraft having servo mechanism for adjusting the flying control surfaces in accordance with movement by a pilot of the flying control member, comprising sensing means operable to monitor flight parameters during an aerobatic manoeuvre, a computer operable by the sensing means to generate signals representative of the flight parameters, and tactile means operable by the signals to impart to the flying control member a tactile response representative of the flight parameters, characterised in that the sensing means are operable to monitor the power transmitted through the servo mechanism for one or more of the flying control surfaces which initiate an aerobatic manoeuvre, the computer is programmed to generate signals representative of the variation in the power during the aerobatic manoeuvre, and the tactile means are operable by the signals to impart to the flying control member a tactile response representative of the variation in power during the aerobatic manoeuvre, the tactile response thereby providing the pilot with an estimate of the indicated airspeed of the aircraft.
Clause 2. A feedback system according to clause 1, characterised in the computer is programmed so that the tactile response is weak when the aerobatic manoeuvre is performed at an indicated airspeed close to one end of the range of airspeed between the stalling speed and the maximum permitted airspeed when flying at, at least, one cruising altitude, and the tactile response is relatively strong when the same aerobatic manoeuvre is performed at an indicated airspeed close to the other end of the range of airspeed at the cruising altitude.
Clause 3. A feedback system according to clause 1, characterised in that the computer is programmed so that the tactile response is weak at the small variations in power which occur when the aerobatic manoeuvre is performed at an indicated airspeed close to the stalling speed of the aircraft at, at least, one cruising altitude of the aircraft, and the tactile response is relatively strong at the larger variations in power which occur when the same aerobatic manoeuvre is performed at an indicated airspeed close to the maximum permitted at the cruising altitude.
Clause 4. A feedback system according to clause 1, characterised in that the computer is programmed so that the tactile response is weak when the aerobatic manoeuvre is performed at an indicated airspeed close to the stalling speed at each altitude in the height range of the aircraft, and the tactile response is relatively strong when the same aerobatic manoeuvre is performed at an indicated airspeed close to the maximum permitted at each altitude.
Clause 5. A feedback system according to clauses 2, 3 or 4 characterised in that the computer is programmed so that strength of the tactile response is directly proportional to the indicated airspeed throughout the range of airspeed between the stalling speed and the maximum permitted airspeed at each altitude when performing the aerobatic manoeuvre.
Clause 6. A feedback system according to any of clauses 1-5, characterised in that the tactile response is a resilient force urging the flying control member towards a central position.
Clause 7. A feedback system according to any of clauses 1-5, characterised in that the tactile response is a vibratory force applied to the flying control member, the frequency of the vibratory force being representative of the said variation in power.
Clause 8. A feedback system according to any of clauses 1-7, characterised in that the sensing means are operable to measure the difference between the power transmitted through the servo mechanism operating the aileron in one of the main wings of the aircraft and the power transmitted through the servo mechanism operating the aileron in the other main wing during variations in the degree of bank of the aircraft, and the computer is programmed to generate signals representative of the said difference in power, and the tactile means are operable by the signals to impart to the flying control member a tactile response representative of the said difference in power.
Clause 9. A feedback system according to any of clauses 1-8, in an aircraft having hydraulic actuators for adjusting the flying control surfaces, characterised in that the power transmitted through the servo mechanism is monitored by measuring the pressure of the hydraulic fluid in the actuators.
Clause 10. A feedback system according to clause 6, characterised in that the tactile means comprises electro-magnetic means operable by said signals generated by the computer to apply to the flying control member a resilient force urging the flying control member towards a central position, the strength of the resilient force being representative of the variation in said power during the aerobatic manoeuvre.
Clause 11. A feedback system according to clause 7, characterised in that the tactile means comprises a vibratory motor fitted to the flying control member and operable by the signals generated by the computer to apply, to the flying control member, a vibrator force the frequency of which is representative of the variation in said power during the aerobatic manoeuvre

## Claims

1. A feedback system for the flying control member in the cockpit of an aircraft having servo mechanism for adjusting the flying control surfaces in accordance with movement by a pilot of the flying control member, comprising sensing means operable to monitor flight parameters during an aerobatic manoeuvre, a computer operable by the sensing means to generate signals representative of the flight parameters, and tactile means operable by the signals to impart to the flying control member a tactile response representative of the flight parameters, **characterised in that** the sensing means are operable to monitor the power transmitted through the servo mechanism for one or more of the flying control surfaces which initiate an aerobatic manoeuvre, the computer is programmed to generate signals representative of the variation in the power during the aerobatic manoeuvre, and the tactile means are operable by the signals to impart to the flying control member a tactile response representative of the variation in power during the aerobatic manoeuvre, the tactile response thereby providing the pilot with an estimate of the indicated airspeed of the aircraft.

2. A feedback system as claimed in claim 1, **characterised in that** the tactile response is a resilient force urging the flying control member towards a central position.

3. A feedback system as claimed in claim 1, **characterised in that** the tactile response is a vibratory force applied to the flying control member, the frequency of the vibratory force being representative of the said variation in power.

4. A feedback system as claimed in any of claims 1-3, **characterised in that** the sensing means are operable to measure the difference between the power transmitted through the servo mechanism operating the aileron in one of the main wings of the aircraft and the power transmitted through the servo mechanism operating the aileron in the other main wing during variations in the degree of bank of the aircraft, and the computer is programmed to generate signals representative of the said difference in power, and the tactile means are operable by the signals to impart to the flying control member a tactile response representative of the said difference in power.

5. A feedback system as claimed in any of claims 1-4, in an aircraft having hydraulic actuators for adjusting the flying control surfaces, **characterised in that** the power transmitted through the servo mechanism is monitored by measuring the pressure of the hydraulic fluid in the actuators.

6. A feedback system as claimed in claim 2, **characterised in that** the tactile means comprises electro-magnetic means operable by said signals generated by the computer to apply to the flying control member a resilient force urging the flying control member towards a central position, the strength of the resilient force being representative of the variation in said power during the acrobatic manoeuvre.

7. A feedback system as claimed in claim 3, **characterised in that** the tactile means comprises a vibratory motor fitted to the flying control member and operable by the signals generated by the computer to apply, to the flying control member, a vibrator force the frequency of which is representative of the variation in said power during the acrobatic manoeuvre.
